# EUROPÄISCHE PATENTSCHRIFT

(11) **EP 1 228 321 B1**
(45) Veröffentlichungstag und Bekanntmachung des Hinweises auf die Patenterteilung: **23.08.2006**
(21) Anmeldenummer: 00984879.7
(22) Anmeldetag: 02.11.2000
(51) Int. Cl.: F16D 65/16, F16D 49/00, F16D 55/00, F16D 55/224, F16D 63/00, B23Q 1/28, B23Q 1/34, B25B 5/06

(54) **KLEMM- UND/ODER BREMSVORRICHTUNG**
CLAMPING AND/OR BRAKING DEVICE
DISPOSITIF DE SERRAGE OU DE FREINAGE

(30) Priorität: 11.11.1999 DE 19954439
(43) Veröffentlichungstag der Anmeldung: 07.08.2002
(73) Patentinhaber: Hofmann, Klaus, 85567 Pienzenau (DE)
(72) Erfinder: MÜLLER, Willy, 85665 Moosach (DE)
(74) Vertreter: Eder, Christian
(86) Internationale Anmeldenummer: PCT/DE2000/003850
(87) Internationale Veröffentlichungsnummer: WO 2001/034990

(56) Entgegenhaltungen:
- EP-A- 0 312 451
- EP-A- 0 834 380
- EP-A- 0 936 366
- DE-A- 3 543 456
- US-A- 3 663 027
- US-A- 4 027 867
- US-A- 4 813 657
- US-A- 5 855 446
- "EMPFINDLICHE WERKSTUCKE SICHER GESPANNT CLAMPING SENSITIVE COMPONENTS SAFELY" F & M. FEINWERKTECHNIK MIKROTECHNIK MESSTECHNIK,DE,CARL HANSER GMBH, MUNCHEN, Bd. 103, Nr. 5, 1. Mai 1995 (1995-05-01), Seiten S33-S36, XP000533509 ISSN: 0944-1018

## Beschreibung

Die Erfindung betrifft eine Klemm- und/oder Bremsvorrichtung mit den Merkmalen der Oberbegriffe der Patentansprüche 1 bzw. 2 und 7.

Klemm- oder Bremsvorrichtungen sind in den verschiedensten Ausführungsformen für die verschiedensten Anwendungsfälle bekannt. So ist in der EP-A-0 936 366 eine Bremsvorrichtung für eine Linearführung bekannt, welche einen Tragkörper aufweist, der längs einer Führungsschiene verfahrbar ist. Der Tragkörper weist Bremsbacken auf, die auf die beiden Längsseiten einwirken. Der Tragkörper ist H-förmig ausgebildet und weist einen dünnen elastisch biegsamen Steg und zwei untere Schenkel auf, mit welchen er die Führungsschiene umgreift. Zwischen jeweils einem unteren Schenkel und der Führungsschiene ist eine Bremsbacke angeordnet. Der Tragkörper ist mit zwei oberen Schenkeln versehen, die gemeinsam mit dem Steg einen Aufnahmeraum bilden, in welchem ein auf die oberen Schenkel einwirkendes krafterzeugendes Mittel vorgesehen ist. Hierbei kann es sich um eine hydraulisch oder pneumatisch betätigbare Kniehebelmechanik oder einen Piezoaktuator handeln. Des Weiteren kann als Kraftwandler ein hydraulisch oder pneumatisch betätigbarer Keilschieber vorgesehen sein, der in einem hierzu sich in Längsrichtung der Bremsvorrichtung verjüngend ausgebildeten Raum zwischen den oberen Schenkeln des Tragkörpers geführt ist. In allen Fällen erfolgt durch die Kraftbeaufschlagung der beiden oberen Schenkel ein Biegen des elastischen Stegs, so dass die beiden unteren Schenkel mit den Bremsbacken nach innen bewegt werden bzw. die Führungsschiene mit einer größeren Kraft beaufschlagen.

Nachteilig bei dieser bekannten Bremsvorrichtung in Verbindung mit dem Einsatz eines elektromechanischen Wandlers, beispielsweise eines Piezoelements, ist insbesondere dessen Empfindlichkeit gegenüber Erschütterungen oder anderweitige mechanische Belastungen.

Der Einsatz einer Kniehebelmechanik oder eines Keilschiebers bedeutet ebenso wie ein elektromechanischer Wandler einen hohen Montage- bzw. Herstellungsaufwand.

Zudem besteht insbesondere bei Klemmvorrichtungen die Forderung nach ausreichend hohen Klemmkräften, die sich bei bekannten Vorrichtungen nur mit einem relativ hohen konstruktiven und damit finanziellen Aufwand realisieren lassen.

Aus der US 5,855,446 ist eine hydraulische Klemmbuchse bekannt, welche an einer Welle ausgerichtet und mit ihr bspw. drehfest verbunden werden kann. Die Buchse weist einen im Wesentlichen stabilen Buchsenkörper auf, der in einem Abstand um eine Antriebswelle angeordnet ist. An diesen Buchsenkörper angrenzend und der Welle zugewandt ist eine mit Druck beaufschlagbare Kammer vorgesehen. Eine sich im Wesentlichen parallel zur Welle erstreckende Seitenwand dieser Kammer dient hier gleichzeitig als Bremselement, welches bei Druckbeaufschlagung der Kammer durch die Expansion der Kammer gegen die Welle gedrückt wird, um so eine reibschlüssige Verbindung herzustellen. Durch eine Σ-förmige Ausbildung der seitlich angrenzenden Wände der Kammer soll verhindert werden, dass sich die Buchse bei Druckbeaufschlagung der Kammer schief zur Welle ausrichtet. Die Σ-förmigen Seitenwände der Kammer ermöglichen im Beaufschlagungsfall eine Ausdehnung dieser Seitenwände in radialer Richtung auf die Welle zu, noch bevor der zunehmende Kammerdruck auch die parallel zur Welle verlaufende Kammerwand gegen die Welle presst. So kann sich die Buchse rechtwinklig zur Wellenachse ausrichten, bevor die drehfeste Verbindung erzeugt wird.

Dieser Klemmvorrichtung weist keine günstige Kräfteübersetzung für die Erzeugung hoher Anpresskräfte auf. Ferner ist die Kammer in ihrer Gestalt und insbesondere in Ihrer Anordnungsmöglichkeit relativ zum Buchsenkörper eingeschränkt. Bremswirkung kann hier nur durch Beaufschlagung mit Überdruck erzielt werden, und das eigentliche Bremselement, welches gegebenenfalls hohe Antriebskräfte übertragen muss, ist nicht fest mit dem Buchsenkörper verbunden, sondern nur über die erzwungenerweise relativ instabile Druckkammer.

Die gattungsgemäße EP-A-0 312 451 beschreibt eine Klemmvorrichtung, bei der ein zu klemmendes Element mittels scharnierartiger Klemmeinrichtungen zwischen Beaufschlagungsflächen dieser Klemmeinrichtungen und einer weiteren Fläche geklemmt wird. Die scharnierartigen Klemmeinrichtungen weisen einen flexiblen Bereich auf, welcher die Bewegung eines die Klemmfläche aufweisenden Teils der Klemmeinrichtung zwischen einer Klemmposition und einer geöffneten Position ermöglicht. Das Betätigen einer derartigen Klemmeinrichtung erfolgt mittels einer Membran, die einen mit Druck beaufschlagbaren Bereich abdichtet. Die Membran weist in der Klemmposition einen S-förmigen Verlauf auf, und kann aus der Klemmposition durch Druckbeaufschlagung aus der S-förmigen Struktur in eine im Wesentlichen U-förmige Struktur überführt werden. Durch diese Bewegung der Membran wird das bewegbare Teil, welches die Klemmfläche aufweist, in die geöffnete Position überführt. Das Rückführen in die Klemmposition erfolgt durch die Beaufschlagung des Druckraums mit Unterdruck.

Ausgehend von diesem Stand der Technik liegt der Erfindung die Aufgabe zugrunde, eine Klemm- und/oder Bremsvorrichtung zu schaffen, welche mit geringem konstruktiven Aufwand herstellbar ist und mit der auf einfache Weise hohe Brems- bzw. Klemmkräfte realisiert werden können. Zudem soll die erfindungsgemäße Klemm- und/oder Bremsvorrichtung vielfältig einsetzbar sein, insbesondere auch unter Bedingungen mit extremen Erschütterungen und/oder Vibrationen.

Die Erfindung löst diese Aufgabe mit den Merkmalen der Patentansprüche 1 bzw. 2 und 7.

Die Erfindung geht von der Erkenntnis aus, dass eine geeignete Kammer bei Beaufschlagung mit Unter- oder Überdruck eine Verformung anstrebt. Wird diese Kammer zu einem großen Teil von wenigstens einer annähernd ebenen Wandung gebildet so verursacht Über- oder Unterdruck in der Kammer zunächst eine Verformung in eine erste Richtung, welche im Wesentlichen senkrecht zu dieser Wandung verläuft. Um der Verformung (Expansion oder Kontraktion) in dieser ersten Richtung nachzugeben, resultiert daraus entsprechend umgekehrt eine Kontraktion oder Expansion der Kammer in eine im Allgemeinen senkrecht zur ersten Richtung (also im Wesentlichen parallel zu der Wandung) verlaufende zweite Richtung.

Dabei wird die Tatsache genutzt, dass geringe Kräfte bzw. Verformungen in der ersten Richtung große Kräfte in der zweiten Richtung erzeugen können. Diese Kräfte werden erfindungsgemäß weitergeleitet und zum Bremsen bzw. Klemmen oder zum Lösen vorgespannter Klemm- bzw. Bremsvorrichtungen genutzt.

Die Kammer ist also zumindest in einem Teilbereich von wenigstens einer biegbaren, aber zug- und/oder druckfesten Wandung begrenzt. Die der Wandung gegenüberliegende Begrenzung der Kammer kann ebenfalls wie die erste Wandung ausgeführt sein. Sie kann aber auch starrer Teil eines Körpers sein. Bevorzugt liegen die Wandungen in einem verhältnismäßig geringem Abstand. Die aus der Verformung der Kammer resultierenden Kräfte werden mindestens zum Teil in Richtung bzw. entlang der Wandung geleitet und im Bereich der Verbindung der Wandung mit einem Grundkörper in diesen eingeleitet. Wählt man den Angriffspunkt solcher Kräfte an dem Grundkörper geeignet aus, und ist dieser Grundkörper wenigstens teilweise elastisch verformbar, so können die Kräfte über diesen Grundkörper an andere Stellen des Grundkörpers, bspw. in Klemm- oder Bremsbereiche übertragen werden. Ein entsprechendes Brems- oder Klemmmittel in diesen Bereichen kann dann mittels der Kräfte in eine Beaufschlagungsposition hinein oder aus dieser heraus bewegt werden, um ein Führungselement oder ein zu klemmendes oder zu bremsendes Element zu bremsen oder freizugeben. Erfindungsgemäß kann sowohl aufgebrachter Über- als auch Unterdruck in der Kammer genutzt werden, um sowohl Zug- als auch Druckkräfte in den Grundkörper einzuleiten. Selbstverständlich können die Klemm- und/ oder Bremsbereiche vor und nach der Krafteipleitung noch in Eingriff mit dem Führungselement oder dem zu klemmenden oder zu bremsenden Element stehen, wobei sich jedoch Änderungen der Beaufschlagungskräfte zwischen den Klemm- und/oder Bremsbereichen und dem jeweils anderen Element ergeben.

Der Grundkörper der erfindungsgemäßen Vorrichtung ist in einer ersten Ausführungsform im Wesentlichen mit einem U-förmigen Querschnitt ausgebildet. Dabei kann an der Innenseite oder Außenseite eines oder beider U-Schenkel des Grundkörpers ein Klemm- und/oder Bremsbereich vorgesehen sein. Zumindest an oder in einer Wandung eines U-Schenkels, an dem ein Klemm- und/oder Bremsbereich vorgesehen ist, ist eine Kammer mit wenigstens einer biegbaren und druck- und/oder zugfesten Wandung zur Erzeugung von Druck- oder Zugspannungen im Grundkörper vorgesehen, die eine Bewegung bzw. Beaufschlagung des wenigstens einen Klemm- und/oder Bremsbereichs bewirken.

In einer zweiten Ausführungsform ist der Grundkörper mit einem im Wesentlichen H-förmigen Querschnitt ausgebildet und die wenigstens eine Wandung des wenigstens einen Raums mit den oberen Schenkeln des Grundkörpers verbunden. Dabei befindet sich an den Innenseiten oder Außenseiten der unteren Schenkel des Grundkörpers wenigstens ein Klemm- und/oder Bremsbereich.

Nach einer Ausführungsform der Erfindung ist die mindestens eine biegbare Wandung im Zustand ohne Druckbeaufschlagung im Wesentlichen eben ausgebildet, so dass in diesem Zustand durch die Wandung im Grundkörper - zusätzlich zu einer möglichen Vorspannung der Wandung - keine nennenswerten Spannungen aufgebaut werden.

Es besteht jedoch selbstverständlich ebenfalls die Möglichkeit, die mindestens eine biegbare Wandung im drucklosen Zustand der Kammer konkav oder konvex relativ zum Kammerinneren auszubilden. Dabei kann - wie auch bei einer ebenen Wandung - bereits im drucklosen Zustand eine Vorspannung im Grundkörper und/oder in der Wandung bestehen. Eine in Richtung des Kammerinneren konvex geformte Wandung kann bei einer Beaufschlagung der Kammer mit Überdruck über ihre Randbereiche eine ggf. zu einer bestehenden Druckvorspannung im Grundkörper und/oder in der Wandung zusätzliche Druckspannung bzw. Druckkraft auf die betreffenden Bereiche des Grundkörpers ausüben, bei einer Beaufschlagung mit Unterdruck dagegen eine ggf. bestehende Druckspannung bzw. Druckkraft reduzieren oder eine Zugspannung bzw. Zugkraft erzeugen. Eine im drucklosen Zustand in Richtung zum Kammeräußeren konvex geformte Wandung kann dazu dienen, um bei einer Beaufschlagung der Kammer mit Überdruck eine Zugspannung bzw. Zugkraft, oder zu erhöhen oder bei einer Beaufschlagung mit Unterdruck eine ggf. zu einer bereits bestehenden Druckvorspannung zusätzliche Druckspannung bzw. Druckkraft zu erzeugen.

Nach einer Ausführungsform der Erfindung kann die wenigstens eine Wandung derart an einem Bereich des Grundkörpers angreifen, dass in Bezug auf den wenigstens einen Klemm- und/oder Bremsbereich auch über den Grundkörper eine mechanische Übersetzung oder Untersetzung entsteht. Hierdurch können entweder durch relativ niedrige Drücke des Druckmediums, welches zur Druckbeaufschlagung der wenigstens einen Kammer dient, hohe Klemm- bzw. Bremskräfte (bei dann relativ kleinem Bewegungsweg der Klemm- bzw. Bremsbereiche) erzeugt werden oder durch relativ hohe (möglicherweise nicht reduzierbare) Drücke des Druckmediums relativ niedrige Klemm- bzw. Bremskräfte (bei dann relativ großem Bewegungsweg der Klemm- bzw. Bremsbereiche).

In einer dritten Ausführungsform weist der Grundkörper einen äußeren Bereich und einen damit über einen Verbindungsbereich verbundenen, als geschlossener Ring ausgebildeten inneren Bereich auf, wobei in dem Verbindungsbereich der wenigstens eine Raum derart vorgesehen ist, dass sich bei einer Druckbeaufschlagung eine Verformung des geschlossenen Rings ergibt. Hierdurch kann eine Änderung der durch die Innenwandung des Rings auf ein Führungselement oder ein zu klemmendes/bremsendes Element ausgeübten Kräfte bewirkt werden, insbesondere auch ein vollständiges Lösen des Rings von dem Element bzw. ein vollständiges Klemmen des Elements

Bei dieser ringförmigen Ausbildung des Grundkörpers weist der Verbindungsbereich in zumindest einem Teilbereich zwei Wandungen auf, welche sich im Wesentlichen zwischen dem äußeren Bereich und dem inneren Bereich des Grundkörpers erstrecken und die wenigstens eine Kammer bilden.

In einer weiteren Ausführungsform der Erfindung kann der gesamte Verbindungsbereich durch sich in radialer Richtung erstreckende, vorzugsweise im Wesentlichen parallel verlaufende Wandungen gebildet sein. Die Wandungen sind im Zustand ohne Beaufschlagung mit Über- oder Unterdruck im Wesentlichen eben ausgebildet, wodurch die wenigstens eine Kammer derart vorgesehen ist, dass der Klemm- und/oder Bremsbereich aus der Beaufschlagungsposition herausbewegt wird und das Element freigibt, wenn die Kammer mit Über- oder Unterdruck beaufschlagt wird.

Nach weiteren Ausführungsformen der Erfindung ist die Wandung zumindest in Teilbereichen, in denen Zug- oder Druckkräfte auf den Grundkörper ausgeübt werden soilen, über einen gegenüber der Dicke der Wandung dünner ausgebildeten Gelenkbereich mit dem Grundkörper verbunden. Hierdurch ergibt sich der Vorteil eines höheren Wirkungsgrads bei der Umsetzung des auf die Wandung ausgeübten Drucks in Zugkräfte bzw. Zugspannungen, die auf den Grundkörper übertragen werden.

Nach weiteren Ausführungsformen der Erfindung kann die Kammer durch zwei vorzugsweise eng beabstandete Wandungen gebildet sein, die jeweils an den Rändern, über die Kräfte auf den Grundkörper übertragen werden sollen, mit diesem verbunden sind. Hierbei ergeben sich gegenüber der Verwendung einer einzigen biegbaren zugfesten Wandung im Wesentlichen die doppelten Kräfte.

Weitere Ausführungsformen der Erfindung ergeben sich aus den Unteransprüchen.

Die Erfindung wird nachfolgend anhand in der Zeichnung dargestellter Ausführungsformen näher erläutert. In der Zeichnung zeigen:
- Fig. 1: einen schematischen Querschnitt einer ersten Ausführungsform einer Klemm- und/oder Bremseinrichtung nach der Erfindung mit H-förmigem Grundkörper und im drucklosen Zustand ebener Wandung;
- Fig. 2: einen schematischen Querschnitt einer zweiten Ausführungsform einer Klemm- und/oder Bremseinrichtung nach der Erfindung mit H-förmigem Grundkörper und im drucklosen Zustand nach innen konvexer Wandung;
- Fig. 3: einen schematischen Querschnitt einer dritten Ausführungsform einer Klemm- und/oder Bremseinrichtung nach der Erfindung mit U-förmigem Grundkörper und im drucklosen Zustand ebener Wandung;
- Fig. 4: einen schematischen Querschnitt einer vierten Ausführungsform einer Klemm- und/oder Bremseinrichtung nach der Erfindung mit U-förmigem Grundkörper und im drucklosen Zustand nach innen konvexer Wandung;
- Fig. 5: einen schematischen Querschnitt einer fünften Ausführungsform einer Klemm- und/oder Bremseinrichtung nach der Erfindung ähnlich Fig. 1 zur Klemmung/Bremsung eines rotierenden scheibenförmigen Elements;
- Fig. 6: einen schematischen Querschnitt einer sechsten Ausführungsform einer Klemm- und/oder Bremseinrichtung nach der Erfindung mit ringförmigem Grundkörper und zwei im drucklosen Zustand ebenen Wandungen, und
- Fig. 7: ein vereinfachtes Diagramm zur Veranschaulichung der Kräfte in der Kammer.

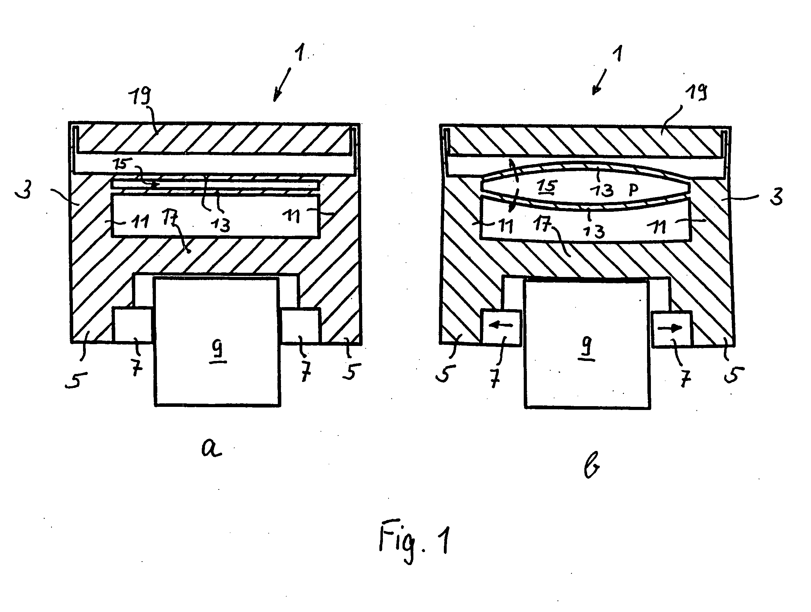

Die in Fig. 1 dargestellte Klemm- und oder Bremseinrichtung 1 umfasst einen Grundkörper 3, der im Querschnitt im Wesentlichen H-förmig ausgebildet ist. An den beiden unteren Schenkeln 5 des Grundkörpers 3 sind innenseitig Bremsbacken 7 vorgesehen, die mit ihrer jeweils nach innen gerichteten Fläche ein Element 9 beaufschlagen, bei dem es sich um ein Führungselement einer Linearführung oder um ein zu klemmendes oder zu bremsendes Element handeln kann.

Zwischen den beiden oberen Schenkeln 11 des H-förmigen Grundkörpers 3 sind zwei dünne biegbare, jedoch zugfeste Wandungen 13 ausgebildet, welche im Wesentlichen parallel geführt sind und einen relativ geringen Abstand zueinander aufweisen. Mit ihren Längskanten (senkrecht zur Zeichenebene) sind die Wandungen 13 mit einem oberen Bereich der oberen Schenkel 11 des H-förmigen Grundkörpers 3 verbunden. An den Querkanten (in der Zeichenebene) sind die Wandungen 13 druckdicht miteinander verbunden oder anderweitig druckdicht verschlossen. Über einen Druckanschluss (bspw. an den Querkanten, an der Wandung oder durch einen im Grundkörper 3 geführten Kanal) kann der zwischen den Wandungen 13 gebildeten druckbeaufschlagbaren Kammer 15 zur Erzeugung eines Überdrucks ein Druckmedium zugeführt oder zur Erzeugung eines Unterdrucks abgezogen werden.

Dabei ist die in Fig. 1 dargestellte Ausführungsform vornehmlich zu Beaufschlagung der Kammer 15 mit Überdruck ausgebildet.

Die Verbindung der Längskanten der Wandungen 13 mit den oberen Schenkeln 11 kann über einen im Querschnitt dünner ausgebildeten Verbindungsbereich erfolgen, der ähnlich einem Filmscharnier wirkt. Hierdurch werden im Bereich der Verbindung geringere mechanische Verluste erzeugt, da geringere Kräfte erforderlich sind, um eine Biegung in diesen Bereichen zu erzeugen.

In dem in Fig. 1a dargestellten drucklosen Zustand liegen die beiden Wandungen 13 im Wesentlichen parallel oder sind leicht konvex nach außen ausgebildet, falls sich nach einer Druckbeaufschlagung und anschließender Entspannung keine vollständige Rückbildung der Verformung der Wandungen mehr einstellen sollte.

In diesem Zustand wird das Element 9 zwischen den Klemm- oder Bremsbacken 7 mit einer durch eine Vorspannung im Grundkörper oder in der Wandungen erzeugten Kraft geklemmt bzw. gebremst. Diese Kraft ist abhängig von den geometrischen Abmessungen des Elements 9 und des Grundkörpers 3 in einem Ausgangszustand ohne Druckbeaufschlagung und ohne das Element 9 zwischen den Backen 7 sowie der Dimensionierung des Grundkörpers 3 und dessen Material.

Wird die Kammer 15 mit einem Druck p beaufschlagt, so werden die biegbaren Wandungen 13, wie in Fig. 1b dargestellt, nach außen gewölbt. Da die Wandungen zugfest ausgebildet sind, resultiert aus der Biegung eine Zugkraft, welche jede Wandung 13 über ihre Längskanten auf die oberen Schenkel 11 des Grundkörpers 3 ausübt.

Der Grundkörper ist so ausgebildet und dimensioniert, dass diese Zugkräfte eine Bewegung der unteren Schenkel 5 nach außen erzeugen. Diese Dimensionierung kann insbesondere durch eine geeignete Auslegung des Stegbereichs 17 des Grundkörpers 3 erfolgen, so dass dieser eine ausreichende Flexibilität aufweist.

Die Wandungen 13 können sich selbstverständlich über die gesamte Länge zwischen den Verbindungsstellen mit dem Grundkörper 3 erstrecken oder auch kürzer ausgebildet sein. Das Kriterium hierfür ist insbesondere die notwendige Zugkraft, die auf die oberen Schenkel 11 ausgeübt werden soll. Denn diese Zugkraft ist im Wesentlichen abhängig vom maximal erreichbaren oder zulässigen Druck in der Kammer 15 und der von diesem Druck beaufschlagbaren Innenflächen der Wandungen 13.

Der im oberen Bereich der oberen Schenkel 11 mit diesen verbundene Montagebereich 19 dient zur Befestigung der Vorrichtung 1 an einer nicht näher dargestellten Einheit. Hierbei kann es sich um ein bewegbares Element, z.B. einen Schlitten einer Werkzeugmaschine oder dergleichen handeln. Damit die vorstehend erläuterte Funktion der Vorrichtung 1 nicht beeinträchtigt wird, ist der Montagebereich 19 mit einem dünn ausgebildeten oberen Bereich der oberen Schenkel 11 verbunden. Dieser weist eine ausreichende Flexibilität auf, die eine ausreichende Bewegungsfreiheit für die oberen Schenkel 11 gewährleistet.

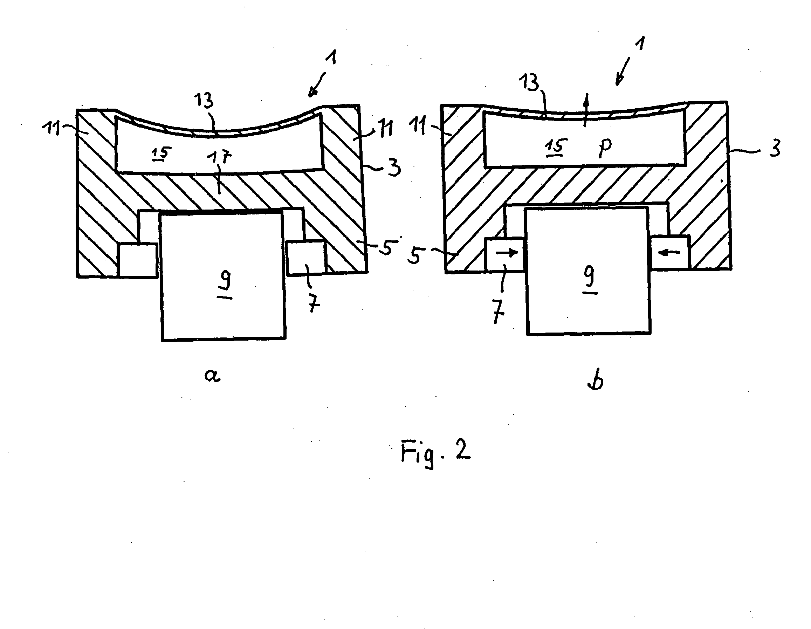

Fig. 2 zeigt eine der in Fig.1 dargestellten Ausführungsform sehr ähnlich Gestaltung einer Klemm- und/oder Bremsvorrichtung 1. Im Unterschied zu Fig. 1 wird hier jedoch nur eine einzige Wandung 13 verwendet, welche im oberen Bereich der oberen Schenkel 11 mit diesen verbunden ist.

Die Kammer 15 wird bei dieser Ausführungsform durch den gesamten Raum zwischen der Wandung 13 und dem Grundkörper 3 zwischen dessen oberen Schenkeln 11 gebildet. Gegenüber der Ausführungsform in Fig. 1 ergeben sich jedoch nur annähernd halb so große Kräfte, die auf die Schenkel 11 ausgeübt werden. Durch die relativ starke Dimensionierung des Stegbereichs 17 kann dessen Biegung infolge der Druckbeaufschlagung fast vernachlässigt werden.

Abweichend von Fig. 1 ist die Ausführungsform in Fig. 2 jedoch dazu vorgesehen, um eine aktive Klemmbewegung in Bezug auf das Element 9 auszuüben. Hierzu ist die Wandung 13 im drucklosen Zustand (Fig. 2a) bezogen auf die Kammer 15 nach innen konvex ausgebildet. Ggf. kann die Wandung auch bereits mit einer definierten Vorspannung versehen und beispielsweise zwischen die oberen Schenkel 11 eingeschweißt sein. Wird die Kammer 15 mit einem Überdruck p beaufschlagt, so wird die Wandung 13 nach außen gedrückt und damit eine Druckkraft auf die Schenkel 11 ausgeübt (Fig. 2b). Dies führt analog zu den vorstehenden Erläuterungen zu Fig. 1 zu einer Bewegung der Backen 7 nach innen in Richtung auf das Element 9 bzw. zu einer Erhöhung der Andruckkräfte der Backen 7 auf das Element 9. Die Wandung 13 muss dabei so dimensioniert sein, dass bei einem maximal zulässigen Druck kein Durchbiegen in einen Zustand mit nach außen konvexer Biegung bzw. ein Nach-außen-Klappen der Wandung 13 erfolgt.

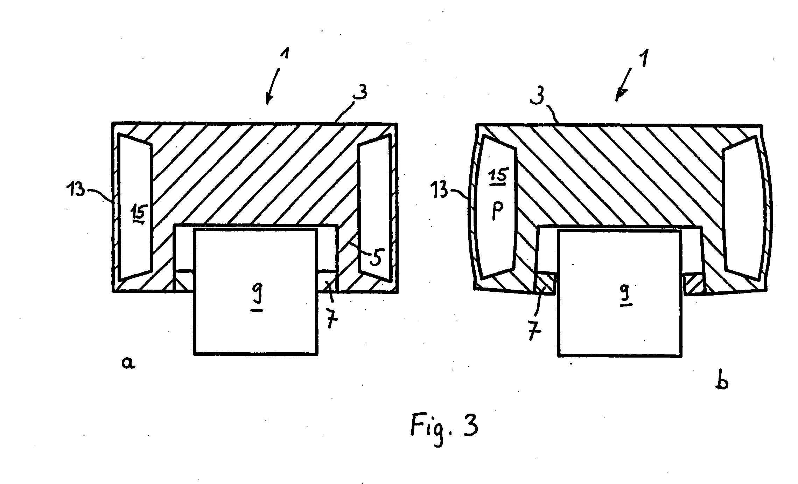

Fig. 3 zeigt eine weiter Ausführungsform, bei der der Grundkörper im Wesentlichen U-förmig ausgebildet ist. An den Seiten der (unteren) Schenkel 5 des Grundkörpers 3 ist wiederum eine druckbeaufschlagbare Kammer 15 ausgebildet, die nach außen mit einer einzigen Wandung 13 abgeschlossen ist. Diese ist im drucklosen Zustand der Kammer 15 im Wesentlichen eben. Bei einer Druckbeaufschlagung der Kammern 15 wölben sich die Wandungen 13 nach außen und üben so in er bereits bekannten Weise eine Zukraft auf den unteren Bereich der unteren Schenkel 5 aus. Da die Wandung 13 an einem nach außen gerichteten Hebelfortsatz am Schenkel 5 angreift, wird der Schenkel 5 nach außen gebogen. Damit ergibt sich ein Verschwenken der Backen 7 nach außen und damit ein Lösen des Elements 9 bzw. ein Verringern der Bremskraft. Im Ruhezustand verhält sich die in Fig. 3 dargestellte Vorrichtung ähnlich der Vorrichtung in Fig. 1, d.h. die Backen 7 beaufschlagen das Element 9 mit einer Vorspannung bzw. einer hierdurch erzeugten Kraft.

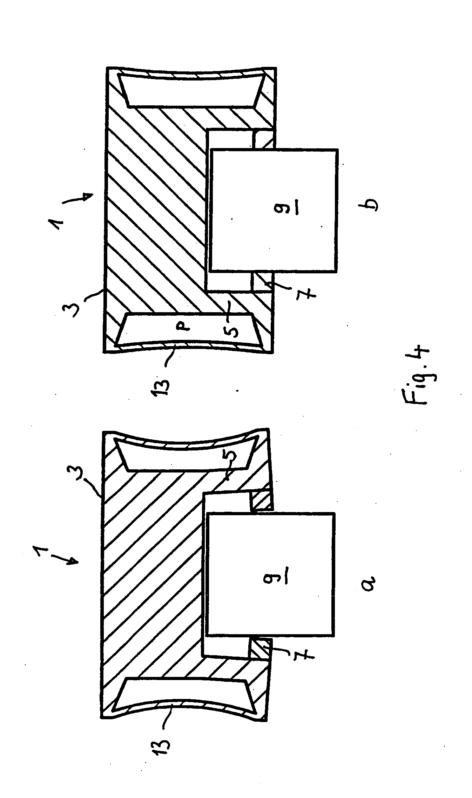

Fig. 4 zeigt ein Ausführungsform ähnlich Fig. 3, wobei jedoch die Wandungen 13 eine Funktion vergleichbar der Funktion in Fig. 2 ausüben. Im drucklosen Zustand sind die Wandungen 13 konvex nach innen gewölbt, so dass bei einer Druckbeaufschlagung Druckkräfte auf den Hebelfortsatz der unteren Schenkel 5 ausgeübt werden. Hierdurch ergibt sich ein aktives Klemmen/Bremsen des Elements 9 (bei Druckbeaufschlagung).

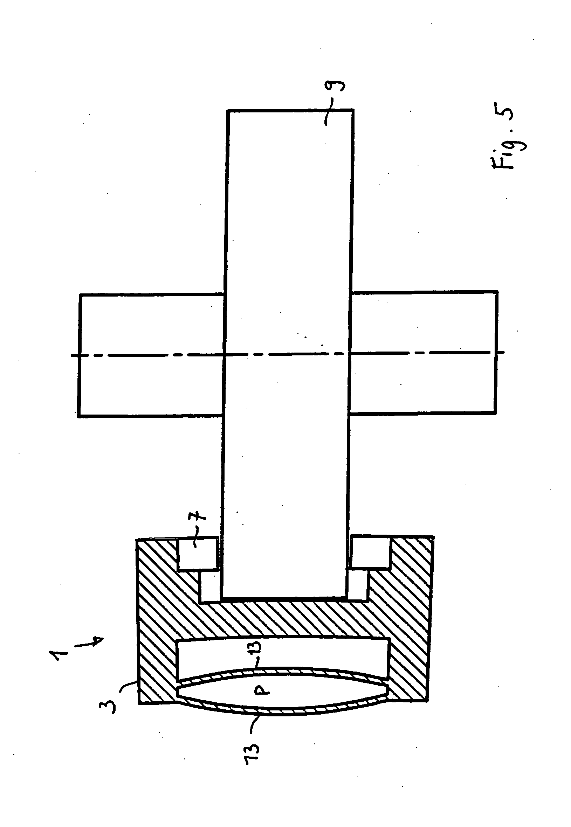

Fig. 5 zeigt eine Ausführungsform einer Vorrichtung ähnlich Fig. 1, jedoch ohne einen Montagebereich, wobei die Vorrichtung 1 im druckbeaufschlagten Zustand ein zu bremsendes/klemmendes Element 9 freigibt, welches als um eine Achse A rotierende Scheibe ausgebildet ist. Hierbei kann es sich um eine Bremsscheibe einer nicht näher dargestellten Vorrichtung handeln, beispielsweise eines Antriebs einer Werkzeugmaschine oder eine Fahrzeugs.

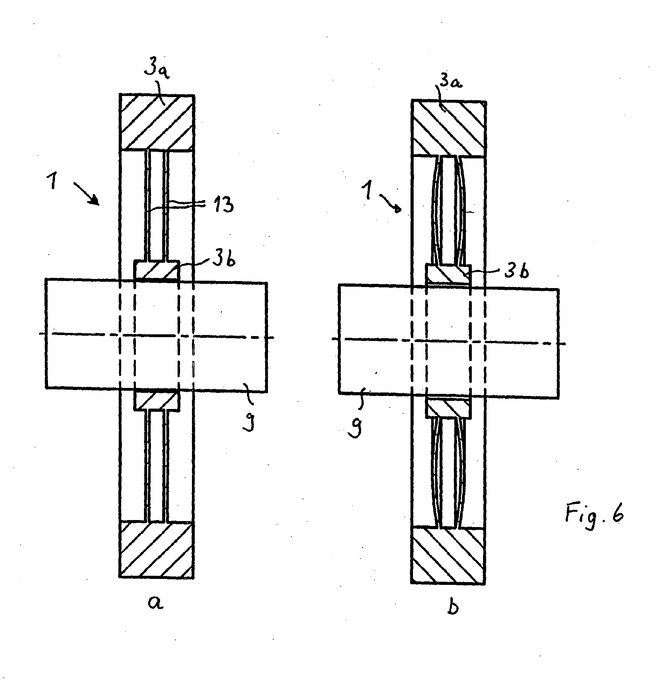

Fig. 6 zeigt eine weitere Ausführungsform einer Klemm- und/oder Bremsvorrichtung 1, bei der der Grundkörper einen äußeren Ring 3a und einen inneren Ring 3b aufweist. Die beiden Ringe 3a, 3b sind über zwei eng beabstandete Wandungen 13 verbunden. Diese liegen im drucklosen Zustand (Fig. 6a) eben bzw. parallel. In diesem Zustand wird durch den inneren Ring 3b ein als Achse, Welle, Führungsstab oder dergleichen ausgebildetes Element 9 geklemmt bzw.gebremst. Das Element 9 bzw. der Durchbruch des inneren Rings 3b müssen nicht im Querschnitt kreisförmig ausgebildet sein, sondern können beliebige zur Erreichung einer Klemm-/Bremswirkung aufeinander abgestimmte Querschnitte aufweisen.

Bei einer Druckbeaufschlagung (Fig. 6b) wölben sich die Wandungen 13 nach außen und üben radiale Zugkräfte auf den inneren Ring 3b aus, der hierdurch gedehnt wird. Damit ergibt sich eine reduzierte Bremswirkung bzw. eine vollkommene Freigabe des Elements 9.

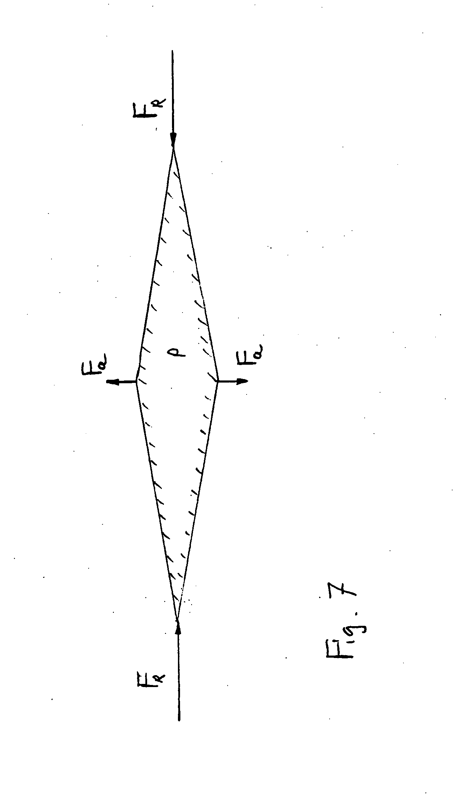

Fig. 7 zeigt vereinfacht das Kräfteverhältnis zwischen der Kraft Fₐ und der resultierenden Kraft F_{R} für eine Kammer mit zwei biegsamen Wandungen. Bereits über geringe Über- bzw. Unterdrücke p und damit geringe Druck- bzw. Zugkräfte Fₐ können große Zug- bzw. Druckkräfte F_{R} erzeugt werden.

Die Wandungen müssen nicht zwangsläufig den gesamten Innenraum zwischen den Ringen 3a, 3b ausfüllen. Vielmehr können durch jeweils ein Paar von Wandungen 13 einzelne speichenartige Kammern erzeugt werden. Beispielsweise kann der Durchbruch des Rings im Querschnitt oval ausgebildet sein und jeweils eine Kammer an der schwächer gekrümmten Seite des Ovals angreifen. Hierdurch kann ein Lösen eines Elements 9 bei einer Druckbeaufschlagung erreicht werden, welche z.B. einen kreisförmigen Querschnitt aufweist, der einen Durchmesser kleiner als die kleine Halbachse des Ovals im drucklosen Zustand besitzt.
Ebenso kann durch ein Vorsehen von zwei speichenartigen, einander gegenüberliegenden Kammern an den stärker gekrümmten Bereichen des Ovals ein aktives Klemmen bei Druckbeaufschlagung erzeugt werden.

Abschließen sei darauf hingewiesen, dass die beschriebenen Ausführungsformen lediglich Möglichkeiten zur Realisierung des Kerns der vorliegenden Erfindung darstellen. Alle in Verbindung mit einer bestimmten Ausführungsform beschriebenen Merkmale können, soweit sinnvoll, auch bei anderen Ausführungsformen verwendet werden.

## Patentansprüche

1. Klemm- und/oder Bremsvorrichtung
a) mit einem Grundkörper (3), welcher wenigstens einen Klemm- und/oder Bremsbereich zur Beaufschlagung eines Elements (9), beispielsweise eines Führungselements oder eines zu klemmenden Elements einer Linearführung, aufweist,
b) wobei am Grundkörper (3) eine Betätigungseinrichtung vorgesehen ist, die bei Betätigung eine im Wesentlichen elastische Verformung des Grundkörpers (3) derart bewirkt, dass der wenigstens eine Klemm- und/oder Bremsbereich in eine Beaufschlagungsposition oder aus dieser heraus bewegt wird oder die Beaufschlagungskraft, die der Klemm- und/oder Bremsbereich auf das Element (9) ausübt, verändert wird, und wobei
c) die Betätigungseinrichtung wenigstens eine am Grundkörper (3) vorgesehene oder in diesem ausgebildete mit Über- oder Unterdruck beaufschlagbare Kammer (15) umfasst, die zumindest in einem Teilbereich von wenigstens einer zumindest in Teilbereichen biegbaren aber zug- und/oder druckfesten Wandung (13) begrenzt ist,
d) welche derart mit dem Grundkörper (3) verbunden ist, dass bei einer Beaufschlagung der wenigstens einen Kammer (15) mit Über- oder Unterdruck Zug- oder Druckkräfte auf den Grundkörper (3) ausgeübt werden, die dessen im Wesentlichen elastische Verformung oder die Veränderung der durch den wenigstens einen Klemm- und/oder Bremsbereich ausgeübten Beaufschlagungskraft erzeugen,
**dadurch gekennzeichnet, dass**
e) der Grundkörper (3) im Wesentlichen mit einem U-förmigen Querschnitt ausgebildet ist, dass an der Innenseite oder Außenseite eines oder beider U-Schenkel (5) des Grundkörpers ein Klemm- und/oder Bremsbereich vorgesehen ist und dass zumindest an oder in einer Wandung eines U-Schenkels (5), an dem ein Klemm- und/oder Bremsbereich vorgesehen ist, eine Kammer (15) mit wenigstens einer biegbaren Wandung (13) vorgesehen ist.

2. Klemm- und/oder Bremsvorrichtung
a) mit einem Grundkörper (3), welcher wenigstens einen Klemm- und/oder Bremsbereich zur Beaufschlagung eines Elements (9), beispielsweise eines Führungselements oder eines zu klemmenden Elements einer Linearführung, aufweist,
b) wobei am Grundkörper (3) eine Betätigungseinrichtung vorgesehen ist, die bei Betätigung eine im Wesentlichen elastische Verformung des Grundkörpers (3) derart bewirkt, dass der wenigstens eine Klemm- und/oder Bremsbereich in eine Beaufschlagungsposition oder aus dieser heraus bewegt wird oder die Beaufschlagungskraft, die der Klemm- und/oder Bremsbereich auf das Element (9) ausübt, verändert wird, und wobei
c) die Betätigungseinrichtung wenigstens eine am Grundkörper (3) vorgesehene oder in diesem ausgebildete mit Über- oder Unterdruck beaufschlagbare Kammer (15) umfasst, die zumindest in einem Teilbereich von wenigstens einer zumindest in Teilbereichen biegbaren aber zug- und/oder druckfesten Wandung (13) begrenzt ist,
d) welche derart mit dem Grundkörper (3) verbunden ist, dass bei einer Beaufschlagung der wenigstens einen Kammer (15) mit Über- oder Unterdruck Zug- oder Druckkräfte auf den Grundkörper (3) ausgeübt werden, die dessen im Wesentlichen elastische Verformung oder die Veränderung der durch den wenigstens einen Klemm- und/oder Bremsbereich ausgeübten Beaufschlagungskraft erzeugen,
**dadurch gekennzeichnet, dass**
e) der Grundkörper (3) mit einem im Wesentlichen H-förmigen Querschnitt ausgebildet ist, dass die wenigstens eine Wandung (13) der wenigstens einen Kammer (15) mit den oberen Schenkeln (11) des Grundkörpers (3) verbunden ist und dass an den Innenseiten oder Außenseiten der unteren Schenkel (5) des Grundkörpers wenigstens ein Klemm- und/oder Bremsbereich vorgesehen ist.

3. Vorrichtung nach Anspruch 1 oder 2, **dadurch gekennzeichnet, dass** die Zug- und/oder druckfeste Wandung (13) so ausgebildet ist, dass der Klemm- und/oder Bremsbereich aus der Beaufschlagungsposition herausbewegt wird und das Element (9) freigibt, wenn die Kammer (15) mit Über- oder Unterdruck beaufschlagt wird.

4. Vorrichtung nach einem der vorhergehenden Ansprüche, **dadurch gekennzeichnet, dass** die wenigstens eine Wandung (13) im Zustand ohne Beaufschlagung mit Über- oder Unterdruck im Wesentlichen eben ausgebildet ist.

5. Vorrichtung nach einem der Ansprüche 1 bis 3, **dadurch gekennzeichnet, dass** die wenigstens eine Wandung (13) im Zustand ohne Beaufschlagung mit Über- oder Unterdruck konvex oder konkav relativ zum Inneren der Kammer (15) ausgebildet ist.

6. Vorrichtung nach einem der vorhergehenden Ansprüche, **dadurch gekennzeichnet, dass** die wenigstens eine Wandung (13) derart an einem Bereich des Grundkörpers (3) angreift, dass in Bezug auf den wenigstens einen Klemm- und/oder Bremsbereich eine mechanische Übersetzung oder Untersetzung der Kräfte entsteht.

7. Klemm- und/oder Bremsvorrichtung
a) mit einem Grundkörper (3), welcher wenigstens einen Klemm- und/oder Bremsbereich zur Beaufschlagung eines Elements (9), beispielsweise eines Führungselements oder eines zu klemmenden Elements einer Linearführung, aufweist,
b) wobei am Grundkörper (3) eine Betätigungseinrichtung vorgesehen ist, die bei Betätigung eine im Wesentlichen elastische Verformung des Grundkörpers (3) derart bewirkt, dass der wenigstens eine Klemm- und/oder Bremsbereich in eine Beaufschlagungsposition oder aus dieser heraus bewegt wird oder die Beaufschlagungskraft, die der Klemm- und/oder Bremsbereich auf das Element (9) ausübt, verändert wird, und wobei
c) die Betätigungseinrichtung wenigstens eine am Grundkörper (3) vorgesehene oder in diesem ausgebildete mit Über- oder Unterdruck beaufschlagbare Kammer (15) umfasst, die zumindest in einem Teilbereich von wenigstens einer zumindest in Teilbereichen biegbaren aber zug- und/oder druckfesten Wandung (13) begrenzt ist,
d) welche derart mit dem Grundkörper (3) verbunden ist, dass bei einer Beaufschlagung der wenigstens einen Kammer (15) mit Über- oder Unterdruck Zug- oder Druckkräfte auf den Grundkörper (3) ausgeübt werden, die dessen im Wesentlichen elastische Verformung oder die Veränderung der durch den wenigstens einen Klemm- und/oder Bremsbereich ausgeübten Beaufschlagungskraft erzeugen, und wobei
e) der Grundkörper (3) einen äußeren Bereich (3a) und einen damit über einen Verbindungsbereich verbundenen, als geschlossener Ring ausgebildeten inneren Bereich (3b) aufweist,
**dadurch gekennzeichnet**,
f) dass der Verbindungsbereich in zumindest einem Teilbereich zwei Wandungen (13) aufweist, welche sich zwischen dem äußeren Bereich (3a) und dem inneren Bereich (3b) des Grundkörpers (3) erstrecken und die wenigstens eine Kammer (15) bilden und welche im Zustand ohne Beaufschlagung mit Über- oder Unterdruck im Wesentlichen eben ausgebildet sind,
g) wodurch die wenigstens eine Kammer (15) derart vorgesehen ist, dass der Klemm- und/oder Bremsbereich aus der Beaufschlagungsposition herausbewegt wird und das Elements (9) freigibt, wenn die Kammer (15) mit Über- oder Unterdruck beaufschlagt wird.

8. Vorrichtung nach Anspruch 7, **dadurch gekennzeichnet, dass** mehrere Kammern (15) speichenartig um den inneren Bereich (3b) angeordnet sind.

9. Vorrichtung nach einem der Ansprüche 7 bis 8, **dadurch gekennzeichnet, dass** der gesamte Verbindungsbereich durch sich in radialer Richtung erstreckende, vorzugsweise im Wesentlichen parallel verlaufende Wandungen (13) gebildet ist.

10. Vorrichtung nach einem der vorigen Ansprüche, **dadurch gekennzeichnet, dass** die Wandung (13) über einen dünner ausgebildeten Gelenkbereich mit dem Grundkörper (3) verbunden ist.

11. Vorrichtung nach einem der vorigen Ansprüche, **dadurch gekennzeichnet, dass** die Kammer (15) durch zwei, vorzugsweise eng beabstandete Wandungen (13) gebildet ist.

## Claims

1. Clamping and/or braking device
a) having a basic body (3), which has at least one clamping and/or braking region for loading an element (9), for example a guide element or a clampable element of a linear guide,
b) wherein provided on the basic body (3) is an actuating device, which upon actuation effects a substantially elastic deformation of the basic body (3) in such a way that the at least one clamping and/or braking region is moved into or out of a loading position or the loading force, which the clamping and/or braking region exerts on the element (9), is varied, and wherein
c) the actuating device comprises at least one chamber (15), which is provided on or formed in the basic body (3) and loadable with pressure above or below atmospheric and which at least in a sub-region is delimited by at least one, at least in sub-regions flexible but tension- and/or compression-resistant wall (13),
d) which is connected in such a way to the basic body (3) that, upon loading of the at least one chamber (15) with pressure above or below atmospheric, there are exerted on the basic body (3) tensile or compressive forces that bring about the substantially elastic deformation thereof or the variation of the loading force exerted by the at least one clamping and/or braking region,
**characterized in that**
e) the basic body (3) is designed substantially with a U-shaped cross section, that at the inside or outside of one or both U-limbs (5) of the basic body a clamping and/or braking region is provided and that at least on or in a wall of a U-limb (5), on which a clamping and/or braking region is provided, a chamber (15) with at least one flexible wall (13) is provided.

2. Clamping and/or braking device
a) having a basic body (3), which has at least one clamping and/or braking region for loading an element (9), for example a guide element or a clampable element of a linear guide,
b) wherein provided on the basic body (3) is an actuating device, which upon actuation effects a substantially elastic deformation of the basic body (3) in such a way that the at least one clamping and/or braking region is moved into or out of a loading position or the loading force, which the clamping and/or braking region exerts on the element (9), is varied, and wherein
c) the actuating device comprises at least one chamber (15), which is provided on or formed in the basic body (3) and loadable with pressure above or below atmospheric and which at least in a sub-region is delimited by at least one, at least in sub-regions flexible but tension- and/or compression-resistant wall (13),
d) which is connected in such a way to the basic body (3) that, upon loading of the at least one chamber (15) with pressure above or below atmospheric, there are exerted on the basic body (3) tensile or compressive forces that bring about the substantially elastic deformation thereof or the variation of the loading force exerted by the at least one clamping and/or braking region,
**characterized in that**
e) the basic body (3) is designed with a substantially H-shaped cross section, that the at least one wall (13) of the at least one chamber (15) is connected to the upper limbs (11) of the basic body (3) and that at the inner sides or outer sides of the lower limbs (5) of the basic body at least one clamping and/or braking region is provided.

3. Device according to claim 1 or 2, **characterized in that** the tension- and/or compression-resistant wall (13) is so designed that the clamping and/or braking region is moved out of the loading position and releases the element (9) when the chamber (15) is loaded with pressure above or below atmospheric.

4. Device according to one of the preceding claims, **characterized in that** the at least one wall (13) in the state without loading with pressure above or below atmospheric is of a substantially flat design.

5. Device according to one of claims 1 to 3, **characterized in that** the at least one wall (13) in the state without loading with pressure above or below atmospheric is of a convex or concave design relative to the interior of the chamber (15).

6. Device according to one of the preceding claims, **characterized in that** the at least one wall (13) acts in such a way on a region of the basic body (3) that in relation to the at least one clamping and/or braking region a mechanical stepping-up or stepping-down of the forces occurs.

7. Clamping and/or braking device
a) having a basic body (3), which has at least one clamping and/or braking region for loading an element (9), for example a guide element or a clampable element of a linear guide,
b) wherein provided on the basic body (3) is an actuating device, which upon actuation effects a substantially elastic deformation of the basic body (3) in such a way that the at least one clamping and/or braking region is moved into or out of a loading position or the loading force, which the clamping and/or braking region exerts on the element (9), is varied, and wherein
c) the actuating device comprises at least one chamber (15), which is provided on or formed in the basic body (3) and loadable with pressure above or below atmospheric and which at least in a sub-region is delimited by at least one, at least in sub-regions flexible but tension- and/or compression-resistant wall (13),
d) which is connected in such a way to the basic body (3) that, upon loading of the at least one chamber (15) with pressure above or below atmospheric, there are exerted on the basic body (3) tensile or compressive forces that bring about the substantially elastic deformation thereof or the variation of the loading force exerted by the at least one clamping and/or braking region, and wherein
e) the basic body (3) comprises an outer region (3a) and an inner region (3b) connected thereto by a connection region and designed as a closed ring,
**characterized in**
f) that the connection region in at least one sub-region has two walls (13), which extend between the outer region (3a) and the inner region (3b) of the basic body (3) and form the at least one chamber (15) and which in the state without loading by pressure above or below atmospheric are of a substantially flat design,
g) with the result that the at least one chamber (15) is provided in such a way that the clamping and/or braking region is moved out of the loading position and releases the element (9) when the chamber (15) is loaded with pressure above or below atmospheric.

8. Device according to claim 7, **characterized in that** a plurality of chambers (15) are disposed in a spoke-like manner around the inner region (3b).

9. Device according to one of claims 7 to 8, **characterized in that** the entire connection region is formed by walls (13) extending in radial direction, preferably running substantially parallel.

10. Device according to one of the preceding claims, **characterized in that** the wall (13) is connected to the basic body (3) by an articulated region of a thinner design.

11. Device according to one of the preceding claims, **characterized in that** the chamber (15) is formed by two, preferably closely spaced walls (13).

## Revendications

1. Dispositif de serrage et/ou de freinage
a) avec un corps de base (3), présentant au moins une zone de serrage et/ou de freinage, pour solliciter un élément (9), par exemple un élément de guidage ou un élément à serrer d'un guidage linéaire,
b) où, sur le corps de base (3), est prévu un dispositif d'actionnement qui, lors de l'actionnement, provoque une déformation sensiblement élastique du corps de base (3), de manière que la au moins une zone de serrage et/ou de freinage se déplace dans une position de sollicitation ou hors de celle-ci, ou modifie la force de sollicitation que la zone de serrage et/ou de freinage exerce sur l'élément (9), et où
c) le dispositif d'actionnement comprend au moins une chambre (15) prévue sur le corps de base (3) ou réalisée dans celui-ci et susceptible d'être sollicité avec une surpression ou une dépression, chambre délimitée au moins dans une zone partielle par au moins une paroi (13) flexible au moins dans des zones partielles mais résistante en traction et/ou en compression,
d) qui est reliée au corps de base (3) de manière que, dans le cas d'une sollicitation de la au moins une chambre (15) avec une surpression ou une dépression, des efforts de traction ou de compression soient exercés sur le corps de base (3), efforts produisant sa déformation sensiblement élastique ou la modification de la force de sollicitation exercée par la au moins une zone de serrage et/ou de freinage,
e) le corps de base (3) est réalisé sensiblement avec une section transversale en forme de U, en ce que, sur la face intérieure ou la face extérieure d'une ou des deux branches de U (5) du corps de base, est prévue une zone de serrage et/ou de freinage, et en ce que, au moins sur ou dans une paroi d'une branche de U (5), sur laquelle est prévue une zone de serrage et/ou de freinage, est prévue une chambre (15) ayant au moins une paroi (13) flexible.

2. Dispositif de serrage et/ou de freinage
a) avec un corps de base (3), présentant au moins une zone de serrage et/ou de freinage, pour solliciter un élément (9), par exemple un élément de guidage ou un élément à serrer d'un guidage linéaire,
b) où, sur le corps de base (3), est prévu un dispositif d'actionnement qui, lors de l'actionnement, provoque une déformation sensiblement élastique du corps de base (3), de manière que la au moins une zone de serrage et/ou de freinage se déplace dans une position de sollicitation ou hors de celle-ci, ou modifie la force de sollicitation que la zone de serrage et/ou de freinage exerce sur l'élément (9), et où
c) le dispositif d'actionnement comprend au moins une chambre (15) prévue sur le corps de base (3) ou réalisé dans celui-ci et susceptible d'être sollicité avec une surpression ou une dépression, chambre délimitée au moins dans une zone partielle par au moins une paroi (13) flexible au moins dans des zones partielles mais résistante en traction et/ou en compression,
d) qui est reliée au corps de base (3) de manière que, dans le cas d'une sollicitation de la au moins une chambre (15) avec une surpression ou une dépression, des efforts de traction ou de compression soient exercés sur le corps de base (3), efforts produisant sa déformation sensiblement élastique ou la modification de la force de sollicitation exercée par la au moins une zone de serrage et/ou de freinage,
**caractérisé en ce que**
e) le corps de base (3) est réalisé avec une section transversale sensiblement en forme de H, **en ce que** la au moins une paroi (13) de la au moins une chambre (15) est reliée aux branches supérieures (11) du corps de base (3), et **en ce que**, sur les faces intérieures ou les faces extérieures de la branche inférieure (5) du corps de base, est prévue au moins une zone de serrage et/ou de freinage.

3. Dispositif selon la revendication 1 ou 2, **caractérisé en ce que** la paroi (13), résistante en traction et/ou en compression, est réalisée de manière que la zone de serrage et/ou de freinage soit sortie de la position de sollicitation et libère l'élément (9), lorsque la chambre (15) est sollicitée par une surpression ou une dépression.

4. Dispositif selon l'une des revendications précédentes, **caractérisé en ce que** la au moins une paroi (13) est sensiblement plane lorsqu'elle est en un état sans sollicitation par une surpression ou une dépression.

5. Dispositif selon l'une des revendications 1 à 3, **caractérisé en ce que** la au moins une paroi (13) est convexe ou concave par rapport à l'intérieur de la chambre (15), lorsqu'elle est en un état sans aucune sollicitation par une surpression ou une dépression.

6. Dispositif selon l'une des revendications précédentes, **caractérisé en ce que** la au moins une paroi (13) agit sur une zone du corps de base (3), de manière qu'une amplification ou une réduction des efforts soit créée par rapport à la au moins une zone de serrage et/ou de freinage.

7. Dispositif de serrage et/ou de freinage
a) avec un corps de base (3), présentant au moins une zone de serrage et/ou de freinage, pour solliciter un élément (9), par exemple un élément de guidage ou un élément à serrer d'un guidage linéaire,
b) où, sur le corps de base (3), est prévu un dispositif d'actionnement qui, lors de l'actionnement, provoque une déformation sensiblement élastique du corps de base (3), de manière que la au moins une zone de serrage et/ou de freinage se déplace dans une position de sollicitation ou hors de celle-ci, ou modifie la force de sollicitation que la zone de serrage et/ou de freinage exerce sur l'élément (9), et où
c) le dispositif d'actionnement comprend au moins une chambre (15) prévue sur le corps de base (3) ou réalisée dans celui-ci et susceptible d'être sollicité avec une surpression ou une dépression, chambre délimitée au moins dans une zone partielle par au moins une paroi (13) flexible au moins dans des zones partielles mais résistante en traction et/ou en compression,
d) qui est reliée au corps de base (3) de manière que, dans le cas d'une sollicitation de la au moins une chambre (15) avec une surpression ou une dépression, des efforts de traction ou de compression soient exercés sur le corps de base (3), efforts produisant sa déformation sensiblement élastique ou la modification de la force de sollicitation exercée par la au moins une zone de serrage et/ou de freinage, et où
e) le corps de base (3) présente une zone extérieure (3a) et une zone intérieure (3b), conformées en anneau fermé, lui étant reliée par l'intermédiaire d'une zone de liaison,
**caractérisé en ce que**
f) la zone de liaison présente, dans au moins une zone partielle, deux parois (13) s'étendant entre la zone extérieure (3a) et la zone intérieure (3b) du corps de base (3) et formant la au moins une chambre (15) et configurées de façon sensiblement plane en l'absence de sollicitation par une surpression ou une dépression,
g) faisant que la au moins une chambre (15) est prévue de manière que la zone de serrage et/ou de freinage soit sortie de la position de sollicitation et libère l'élément (9), lorsque la chambre (15) est sollicitée par une surpression ou une dépression.

8. Dispositif selon la revendication 5, **caractérisé en ce que** plusieurs chambres (15) sont disposées à la manière de rayons autour de la zone intérieure (3b).

9. Dispositif selon l'une des revendications 7 à 8, **caractérisé en ce que** l'ensemble de la zone de liaison est formé par des parois (13), s'étendant en direction radiale, de préférence s'étendant sensiblement parallèlement.

10. Dispositif selon l'une des revendications précédentes, **caractérisé en ce que** la paroi (13) est reliée au corps de base (3) par l'intermédiaire d'une zone d'articulation plus mince.

11. Dispositif selon l'une des revendications précédentes, **caractérisé en ce que** la chambre (15) est formée par deux parois (13), de préférence étroitement espacées.
